# EUROPÄISCHE PATENTSCHRIFT

(11) **EP 3 412 553 B1**
(45) Veröffentlichungstag und Bekanntmachung des Hinweises auf die Patenterteilung: **24.02.2021**
(21) Anmeldenummer: 18167696.6
(22) Anmeldetag: 17.04.2018
(51) Int. Cl.: B62M 6/45

(54) **REGELUNGSVERFAHREN FÜR EINEN ANTRIEBSMOTOR EINES ZWEIRADS, STEUERGERÄT UND ZWEIRAD**
CONTROL UNIT AND BICYCLE, CONTROL METHOD FOR A DRIVE ENGINE OF A BICYCLE
PROCÉDÉ DE RÉGULATION POUR UN MOTEUR D'ENTRAÎNEMENT D'UNE BICYCLETTE, APPAREIL DE COMMANDE ET BICYCLETTE

(30) Priorität: 09.06.2017 DE 102017209811
(43) Veröffentlichungstag der Anmeldung: 12.12.2018
(73) Patentinhaber: Robert Bosch GmbH, 70442 Stuttgart (DE)
(72) Erfinder: Koenig, Benjamin, 73240 Wendlingen (DE)

(56) Entgegenhaltungen:
- WO-A1-2014/029759
- DE-A1-102016 109 158
- JP-A- H10 338 185

## Beschreibung

Die vorliegende Erfindung betrifft ein Regelungsverfahren für einen Antriebsmotor eines zumindest teilweise motorisch angetriebenen Zweirads und ein Steuergerät, welches dazu eingerichtet ist, das Regelungsverfahren durchzuführen. Die Erfindung betrifft auch das Zweirad mit dem Steuergerät.

### Stand der Technik

Das Dokument DE 20 2011 004 525 U1 beschreibt eine Regelung eines Elektromotors eines Elektrofahrrads.

Die Dokumente EP 2 436 590 A1 und EP 2 783 969 A1 beschreiben jeweils ein Steuerverfahren für ein Elektrofahrrad.

Das Dokument JP H10 338185 A zeigt ein Verfahren und ein Steuergerät nach den Präamblen der Ansprüche 1 und 9.

In einem Wiegetritt steht ein Fahrradfahrer vom Sattel auf und pedaliert im Stehen kraftvoll. Diese Fahrttechnik wird typischerweise an einem Hang der Fahrtstrecke mit großer Neigung oder zur starken Beschleunigung des Fahrrads verwendet. Im Falle eines Wiegetritts wird durch den Fahrradfahrer eine hohe mittlere Trittkraft bei einer geringen Trittfrequenz pro Minute erzeugt, wobei die Trittkraft impulsartig erzeugt wird. Zwischen zwei Trittkraftimpulsen liegt eine Zeitspanne geringer Trittkraft.

Die Ansteuerung des Antriebsmotors eines zumindest teilweise motorisch angetriebenen Zweirads, insbesondere eines Elektrofahrrads, erfolgt typischerweise in Abhängigkeit einer Trittgröße des Zweiradfahrers, wobei diese insbesondere das Drehmoment der Kurbelwelle bzw. Trittkraft repräsentiert und über einen Zeitraum von Sekundenbruchteilen gemittelt wird. Beim Wiegetritt resultiert aufgrund der geringen Trittfrequenz und der hohen Trittkraftimpulse durch die Mittelung ein unstetiges bzw. unruhiges Fahrverhalten des Zweirads, insbesondere in Richtung der Längsachse des Zweirads. Eine Fahrt des Zweirads mit einem Anhänger an einem Hang der Fahrtstrecke kann deshalb für ein im Anhänger befördertes Kind sehr unbequem sein. Das resultierende Fahrverhalten im Wiegetritt kann zur Beschädigung stoßempfindlicher Transportgüter in einem angekuppelten Anhänger führen. Zusätzlich treten Kipp- bzw. Seitwärtsbewegungen eines Rahmens des Zweirads in Richtung der Querachse des Zweirads auf.

Die Aufgabe der vorliegenden Erfindung ist es, bei einem Wiegetritt des Zweiradfahrers den Vortrieb des Zweirads gleichmäßig zu erzeugen.

### Offenbarung der Erfindung

Die vorliegende Erfindung betrifft ein Regelungsverfahren für einen Antriebsmotor eines zumindest teilweise motorisch angetriebenen Zweirads, insbesondere eines Elektrofahrrads, zur Erzeugung eines konstanten Vortriebs des Zweirads bei einem erkannten Wiegetritt des Zweiradfahrers. Die Erfindung betrifft auch ein Steuergerät, welches dazu eingerichtet ist, das Regelungsverfahren durchzuführen, und das Zweirad mit dem Steuergerät.

Das Zweirad weist mindestens zwei Pedale und einen Antriebsmotor, welcher insbesondere ein Elektromotor ist, auf. Des Weiteren weist das Zweirad einen Trittgrößensensor zur Erfassung von Trittgrößen, die die Betätigung der Pedale durch den Zweiradfahrer repräsentieren, auf, wobei die Trittgrößen insbesondere eine Trittkraft oder ein Drehmoment des Zweiradfahrers repräsentieren. Das Zweirad weist ferner einen Positionssensor auf, welcher die Pedalstellung der Pedale erfasst. Das Zweirad weist auch das erfindungsgemäße Steuergerät auf. Das Zweirad ist dazu eingerichtet, manuell mittels einer Trittkraft des Zweiradfahrers auf die Pedale des Zweirads und motorisch mittels eines Motordrehmoments des Antriebsmotors angetrieben zu werden.

Das erfindungsgemäße Regelungsverfahren für ein Motordrehmoment eines Antriebsmotors eines Zweirads weist eine Erfassung von Trittgrößen und eine Erfassung wenigstens einer Pedalstellung der Pedale auf. Anschließend wird ein Wiegetritt des Zweiradfahrers in Abhängigkeit von den erfassten Trittgrößen und der erfassten Pedalstellung erkannt. Die Regelung des Motordrehmoments des Antriebsmotors zur Erzeugung eines konstanten Vortriebs des Zweirads erfolgt in Abhängigkeit der Trittgröße und des erkannten Wiegetritts. Dadurch resultiert der Vorteil eines gleichmäßigeren Fahrverhaltens des Zweirads, d.h. eine Verstetigung der Fahrt, während eines Wiegetritts des Zweiradfahrers. Das gleichmäßigere Fahrverhalten ist beispielsweise vorteilhaft für ein in einem Kinderanhänger befördertes Kind und/oder schützt beförderte Transportgüter vor eventuellen Beschädigungen.

In einer bevorzugten Ausgestaltung weist das Regelungsverfahren vor der Erkennung des Wiegetritts eine Erfassung einer Lage des Zweiradrahmens mittels eines Lagesensors, insbesondere mittels einer inertialen Messeinheit, auf. Die Erkennung des Wiegetritts des Zweiradfahrers erfolgt in dieser Ausgestaltung zusätzlich in Abhängigkeit der erfassten Lage des Fahrradrahmens. Die Erkennung des Wiegetritts des Zweiradfahrers ist in dieser Ausgestaltung vorteilhafterweise genauer.

In einer weiteren Ausgestaltung weist das Regelungsverfahren vor der Erkennung des Wiegetritts eine Erfassung einer Beschleunigung des Zweirads in Richtung der Querachse des Zweirads mittels eines Beschleunigungssensors auf. Die Erkennung des Wiegetritts des Zweiradfahrers erfolgt in dieser Ausgestaltung zusätzlich in Abhängigkeit der erfassten Beschleunigung. Dadurch entsteht der Vorteil, dass ein Wiegetritt des Zweiradfahrers zuverlässiger erkannt wird.

In einer anderen Ausgestaltung erfolgt eine Erfassung einer Sattelbelastung durch den Zweiradfahrer. Die Regelung des Motordrehmoments des Antriebsmotors zur Erzeugung eines konstanten Vortriebs wird in dieser Ausgestaltung in Abhängigkeit der Sattelbelastung durchgeführt. Beispielsweise erfolgt die Regelung des Motordrehmoments nur, wenn keine Sattelbelastung erfasst wird, d.h. wenn der Zweiradfahrer im Stehen pedaliert. Die Wiegetritterkennung wird dadurch verbessert.

In einer besonders bevorzugten Ausgestaltung des Regelungsverfahrens wird zusätzlich eine Erfassung einer Ankupplung eines Anhängers an eine Anhängerkupplung des Zweirads durchgeführt. Die Regelung des Motordrehmoments des Antriebsmotors erfolgt in dieser Ausgestaltung zur Erzeugung eines konstanten Vortriebs in Abhängigkeit einer erfassten Ankupplung. Dadurch entsteht der Vorteil, dass die Regelung des Motordrehmoments nur im Falle einer Anhängerankupplung durchgeführt und das Fahrverhalten des Zweirads ansonsten nicht angepasst wird.

In einer Weiterführung erfolgt die Erkennung des Wiegetritts des Zweiradfahrers in Abhängigkeit eines Vergleichs zwischen einer rechten Trittkraft des Zweiradfahrers auf ein rechtes Pedal und einer linken Trittkraft des Zweiradfahrers auf ein linkes Pedal, wobei die rechte Trittkraft und die linke Trittkraft in Abhängigkeit der erfassten Trittgrößen ermittelt werden. Durch die Weiterführung wird ein Wiegetritt des Zweiradfahrers gut erkannt.

In einer alternativen Ausführung erfolgt die Erkennung des Wiegetritts des Zweiradfahrers in Abhängigkeit eines Vergleichs der Trittgrößen mit einem Schwellenwert. In dieser Ausführung erfolgt die Erkennung des Wiegetritts vorteilhafterweise optimiert.

Vorzugsweise erfolgt die Erkennung des Wiegetritts des Zweiradfahrers in Abhängigkeit eines Vergleichs zwischen einer Trittfrequenz und einer Grenzfrequenz, wobei die Trittfrequenz in Abhängigkeit der erfassten Trittgrößen ermittelt wird. Dadurch entsteht der Vorteil, dass eine zuverlässige Erkennung des Wiegetritts durchgeführt wird.

Die Erfindung betrifft auch das Steuergerät für den Antriebsmotor des Zweirads. Das Steuergerät erfasst Trittgrößen, die die Betätigung der Pedale durch den Zweiradfahrer repräsentieren, mittels eines Trittgrößensensors, insbesondere eines Drehmomentsensors. Des Weiteren erfasst das Steuergerät die Pedalstellung von mindestens einem Pedal des Zweirads mittels eines Positionssensors. Das Steuergerät erkennt einen Wiegetritt des Zweiradfahrers in Abhängigkeit von den erfassten Trittgrößen und der erfassten Pedalstellung. Das Steuergerät erzeugt ferner ein Steuersignal zur Regelung des Motordrehmoments in Abhängigkeit der Trittgröße und des erkannten Wiegetritts. Die Regelung erfolgt zur Erzeugung eines konstanten Vortriebs während eines Wiegetritts des Zweiradfahrers.

Optional kann das Steuergerät eine Sattelbelastung durch den Zweiradfahrer mittels eines Drucksensors erfassen, wobei der Drucksensor insbesondere im Sattel angeordnet ist. Das Steuersignal wird in dieser Ausgestaltung zusätzlich in Abhängigkeit der erfassten Sattelbelastung erzeugt, insbesondere nur dann, wenn keine Sattelbelastung erfasst wird.

In einer besonders bevorzugten Ausgestaltung erfasst das Steuergerät die Ankupplung des Anhängers an die Anhängerkupplung des Zweirads mittels eines Kupplungssensors. Das Steuergerät erzeugt in dieser Ausgestaltung das Steuersignal nur bei der erfassten Ankupplung.

Die vorliegende Erfindung wird nachfolgend anhand bevorzugter Ausführungsformen und beigefügter Zeichnungen erläutert.
- Figur 1:: Elektrofahrrad
- Figur 2:: Blockschaltbild eines Steuergerätes
- Figur 3:: Ablaufdiagramm eines Regelungsverfahrens

### Ausführungsbeispiele

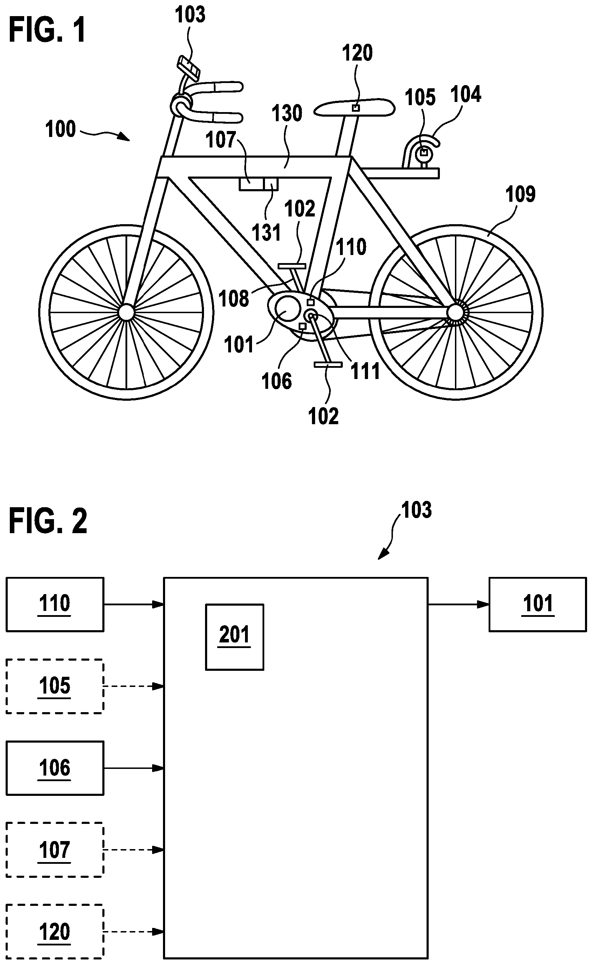

Figur 1 zeigt ein Elektrofahrrad 100 mit einem Rahmen 130, welches einen Antriebsmotor 101, insbesondere einen Elektromotor, sowie zwei Pedale 102 umfasst. Die Pedale 102 sind durch Tretkurbeln 108 mit der Tretachse bzw. Kurbelwelle 111 verbunden. Mittels der Pedale 102 wird eine manuelle Trittkraft und eine Trittfrequenz des Zweiradfahrers in ein Drehmoment der Tretachse 111 mit einer Drehzahl übersetzt, wobei die Tretachse 111 das erzeugte Fahrerdrehmoment und die Drehzahl auf ein Antriebsrad 109 überträgt. Zwischen der Tretachse 111 und dem Antriebsrad 109 ist typischerweise eine Übersetzungsstufe angeordnet, insbesondere ein Getriebe (nicht dargestellt). An dem Elektrofahrrad 100 ist außerdem ein Steuergerät 103 angeordnet. Das Steuergerät 103 steuert den Antriebsmotor 101 zur Kraftunterstützung für den Radfahrer an, das heißt das Fahrerdrehmoment des Radfahrers wird durch ein mittels des Antriebsmotors 101 erzeugtes Motordrehmoment unterstützt. Das Elektrofahrrad 100 weist einen Trittgrößensensor 110 zur Erfassung der Trittgrößen auf, wobei die Trittgrößen die manuelle Trittkraft F des Zweiradfahrers auf die Pedale 102 oder das Fahrerdrehmoment repräsentiert. Als Trittgrößensensor 110 ist beispielsweise ein Drehmomentsensor an der Tretachse 111 und/oder ein Kraftsensor an den Pedalen 102 vorgesehen. Das Motordrehmoment wird üblicherweise in Abhängigkeit der erfassten Trittgrößen erzeugt bzw. der Antriebsmotor in Abhängigkeit der erfassten Trittgrößen geregelt. Das Elektrofahrrad 100 umfasst außerdem eine Anhängerkupplung 104 mit einem Kupplungssensor 105. Der Kupplungssensor 105 erkennt die Ankupplung eines Anhängers (nicht dargestellt). Des Weiteren weist das Elektrofahrrad 100 einen Positionssensor 106 zur Bestimmung der Pedalstellung sowie mindestens einen Beschleunigungssensor 107 auf, welcher die Beschleunigung in Richtung der Querachse des Elektrofahrrads 100. Optional kann ein Lagesensor 131 am Elektrofahrrad 100 vorgesehen sein, insbesondere eine inertiale Messeinrichtung. Optional wird eine Sattelbelastung durch den Radfahrer mittels eines Drucksensors 120 erfasst.

In Figur 2 ist ein Blockschaltbild des Steuergerätes 103 dargestellt, welches dazu eingerichtet ist, das erfindungsgemäße Steuerverfahren für einen Antriebsmotor 101 des Elektrofahrrads 100 durchzuführen. Das Steuergerät weist eine Recheneinheit 201 auf. Das Steuergerät 103 erfasst die Trittgrößen vom Trittgrößensensor 110, insbesondere das Fahrerdrehmoment an der Tretachse 111 und/oder Trittkräfte an mindestens einem der Pedale 102. Das Steuergerät 103 erfasst des Weiteren eine Pedalstellung der Pedale 102 mittels des Positionssensors 106. Optional erfasst das Steuergerät 103 die Ankupplung eines Anhängers mittels des Kupplungssensors 105. Außerdem kann erfasst das Steuergerät 103 optional eine Beschleunigung a des Zweirads 100 in Richtung der Querachse des Zweirads 100 mittels des Beschleunigungssensors 107. Es kann ferner vorgesehen sein, dass das Steuergerät 103 die Sattelbelastung des Zweiradfahrers mittels des Drucksensors 120 erfasst.

Das Steuergerät 103 bzw. die Recheneinheit 201 vergleicht beispielsweise die erfasste Trittgrößen mit einem Schwellenwert S und ermittelt eine Trittfrequenz in Abhängigkeit der erfassten Trittgröße. Bei einer erfassten Trittgröße größer dem Schwellenwert S und bei einer ermittelten Trittfrequenz kleiner einer Grenzfrequenz GF erkennt die Recheneinheit 201 einen Wiegetritt des Zweiradfahrers in Abhängigkeit der erfassten Pedalstellung. Es kann vorgesehen sein, dass die Recheneinheit 201 den Wiegetritt zusätzlich in Abhängigkeit der erfassten Ankupplung, der erfassten Sattelbelastung und/oder der erfassten Beschleunigung a erkennt.

Anschließend erzeugt das Steuergerät 201 ein Steuersignal zur Regelung des Antriebsmotors 101 zur Erzeugung eines konstanten Vortriebs des Zweirads 100 in Abhängigkeit der Trittgrößen bei einem erkannten Wiegetritt.

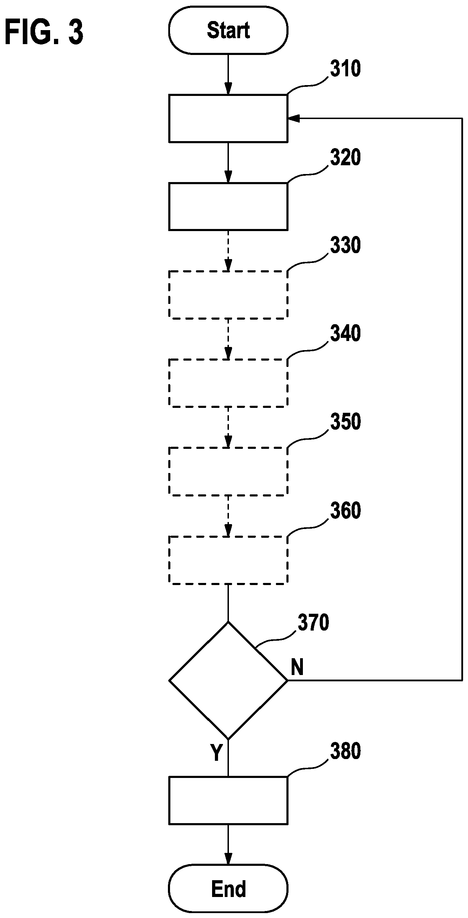

In Figur 3 ist das Ablaufdiagramm eines erfindungsgemäßen Regelungsverfahrens dargestellt. In einem ersten Schritt 310 werden Trittgrößen erfasst, beispielsweise der Fahrerdrehmomentverlauf. In einem zweiten Schritt 320 erfolgt eine Erfassung 320 wenigstens einer Pedalstellung der Pedale 102.

Optional kann vorgesehen sein in einem Schritt 330 eine Lage des Zweiradrahmens 130 und/oder eine Beschleunigung a des Zweirads 100 in Richtung der Querachse des Zweirads 100 zu erfassen. Des Weiteren wird optional in einem Schritt 350 eine Sattelbelastung durch den Zweiradfahrer erfasst. Zusätzlich wird bevorzugt ein optionaler Schritt 360 durchgeführt, in welchem eine Ankupplung eines Anhängers an eine Anhängerkupplung 104 des Zweirads 100 erfasst wird.

Anschließend erfolgt eine Erkennung 370 des Wiegetritts des Zweiradfahrers zusätzlich in Abhängigkeit von den erfassten Trittgrößen und der erfassten Pedalstellung. Der Wiegetritt kann optional in Abhängigkeit der erfassten Lage, der erfassten Beschleunigung a, der erfassten Sattelbelastung und/oder der Ankupplung eines Anhängers durchgeführt werden.

Beispielsweise wird im Schritt 370 die Erkennung des Wiegetritts des Zweiradfahrers bei einer erfassten Trittgröße größer einem Schwellenwert S und bei einer ermittelten Trittfrequenz kleiner einer Grenzfrequenz GF in Abhängigkeit der erfassten Pedalstellung durchgeführt. Der Schwellenwert S für den Vergleich 320 mit der erfassten Trittgröße repräsentiert beispielsweise einen Wert der Trittkraft des Zweiradfahrers zwischen 250 und 1500 N, insbesondere repräsentiert der Schwellenwert eine Trittkraft von 750 N. Die Grenzfrequenz GF liegt insbesondere in einem Bereich zwischen 5 und 50 rpm. Bevorzugt ist die Grenzfrequenz GF=40 rpm. Bei einem erkannten Wiegetritt erfolgt in einem abschließenden Schritt 380 eine Regelung 380 des Motordrehmoments des Antriebsmotors 101 zur Erzeugung eines konstanten Vortriebs des Zweirads 100 in Abhängigkeit der Trittgrößen und des erkannten Wiegetritts. Der konstante Vortriebs des Zweirads 100 wird beispielsweise wird ein konstantes Motordrehmoment des Antriebsmotors erzeugt, wobei das Motordrehmoment in Abhängigkeit der erfassten Trittgröße am Anfang der Wiegetritterkennung erzeugt wird. Alternativ und bevorzugt wird das Motordrehmoment bei der Erfassung großer Trittgrößen reduziert und/oder bei der Erfassung geringer Trittgrößen erhöht.

In einer optionalen Ausgestaltung weist das Regelungsverfahren einen zusätzlichen Schritt 390 auf. In dem Schritt 390 erfolgt eine Ansteuerung eines Federelements des Zweirads in Abhängigkeit des erkannten Wiegetritts, wobei das Federelement beispielsweise an der Lenkerstange oder am Rahmen angeordnet ist, insbesondere ist das Federelement eine Federgabel oder ein Federdämpfer an einem Mountainbike als Zweirad 100. Es kann beispielsweise vorgesehen sein, dass durch die Ansteuerung 390 des Federelements bei einem erkannten Wiegetritt die Federelemente blockiert bzw. nicht dämpfend eingestellt werden. Durch diese optionale Ausgestaltung wird bei einem Wiegetritt eines Zweiradfahrers eine Wippbewegung des Zweirads nach vorne und hinten aufgrund eines einfedernden Federelements vermieden bzw. reduziert.

## Patentansprüche

1. Regelungsverfahren für ein Motordrehmoment eines Antriebsmotors (101) eines Zweirads (100), wobei das Zweirad (100) dazu eingerichtet ist, manuell mittels einer Trittkraft des Zweiradfahrers auf Pedale (102) des Zweirads (100) und motorisch mittels eines Motordrehmoments des Antriebsmotors (101) angetrieben zu werden, wobei das Regelungsverfahren wenigstens die folgenden Schritte aufweist
• Erfassung (310) von Trittgrößen, die die Betätigung der Pedale (102) durch den Zweiradfahrer repräsentieren,
• Erfassung (320) wenigstens einer Pedalstellung der Pedale (102),
**gekennzeichnet durch** die folgenden Schritte:
• Erkennung (370) eines Wiegetritts des Zweiradfahrers in Abhängigkeit von den erfassten Trittgrößen und der erfassten Pedalstellung, und
• Regelung (380) des Motordrehmoments des Antriebsmotors (101) zur Erzeugung eines konstanten Vortriebs des Zweirads (100) in Abhängigkeit der Trittgrößen und des erkannten Wiegetritts.

2. Regelungsverfahren nach Anspruch 1, **dadurch gekennzeichnet, dass** das Regelungsverfahren die folgenden Schritte aufweist
• Erfassung (330) einer Lage des Zweiradrahmens (130), und
• Erkennung (370) des Wiegetritts des Zweiradfahrers zusätzlich in Abhängigkeit der erfassten Lage des Fahrradrahmens (130).

3. Regelungsverfahren nach einem der vorhergehenden Ansprüche, **dadurch gekennzeichnet, dass** das Regelungsverfahren die folgenden Schritte aufweist
• Erfassung (340) einer Beschleunigung (a) des Zweirads (100) in Richtung der Querachse des Zweirads (100), und
• Erkennung (370) des Wiegetritts des Zweiradfahrers zusätzlich in Abhängigkeit der erfassten Beschleunigung.

4. Regelungsverfahren nach einem der vorhergehenden Ansprüche, **dadurch gekennzeichnet, dass** das Regelungsverfahren zusätzlich die folgenden Schritte aufweist
• Erfassung (350) einer Sattelbelastung durch den Zweiradfahrer, und
• Regelung (380) des Motordrehmoments des Antriebsmotors (101) zusätzlich in Abhängigkeit der Sattelbelastung.

5. Regelungsverfahren nach einem der vorhergehenden Ansprüche, **dadurch gekennzeichnet, dass** das Regelungsverfahren zusätzlich die folgenden Schritte aufweist
• Erfassung (360) einer Ankupplung eines Anhängers an eine Anhängerkupplung (104) des Zweirads (100), und
• Regelung (380) des Motordrehmoments des Antriebsmotors (101) zusätzlich in Abhängigkeit einer erfassten Ankupplung erfolgt.

6. Regelungsverfahren nach einem der vorhergehenden Ansprüche, **dadurch gekennzeichnet, dass** die Erkennung (370) des Wiegetritts des Zweiradfahrers in Abhängigkeit eines Vergleichs zwischen einer rechten Trittkraft des Zweiradfahrers auf ein rechtes Pedal und einer linken Trittkraft des Zweiradfahrers auf ein linkes Pedal erfolgt, wobei die rechte Trittkraft und die linke Trittkraft in Abhängigkeit der erfassten Trittgrößen ermittelt werden.

7. Regelungsverfahren nach einem der vorhergehenden Ansprüche, **dadurch gekennzeichnet, dass** die Erkennung (370) des Wiegetritts des Zweiradfahrers in Abhängigkeit eines Vergleichs (320) der Trittgrößen mit einem Schwellenwert (S) durchgeführt wird.

8. Regelungsverfahren nach einem der vorhergehenden Ansprüche, **dadurch gekennzeichnet, dass** die Erkennung (370) des Wiegetritts des Zweiradfahrers in Abhängigkeit eines Vergleichs zwischen einer Trittfrequenz und einer Grenzfrequenz erfolgt, wobei die Trittfrequenz in Abhängigkeit der erfassten Trittgrößen ermittelt wird.

9. Steuergerät (103) für einen Antriebsmotor (101) eines Zweirads (100), wobei das Zweirad (100) dazu eingerichtet ist, manuell mittels einer Trittkraft des Zweiradfahrers auf Pedale des Zweirads und motorisch mittels eines Motordrehmoments des Antriebsmotors angetrieben zu werden, wobei das Steuergerät (103)
• Trittgrößen mittels eines Trittgrößensensors (110), insbesondere eines Drehmomentsensors, erfasst, wobei die Trittgrößen die Betätigung der Pedale durch den Zweiradfahrer repräsentieren,
• eine Pedalstellung mindestens eines Pedals (102) des Zweirads (100) mittels eines Positionssensors (106) erfasst,
**dadurch gekennzeichnet, dass** das Steuergerät zudem
• einen Wiegetritt des Zweiradfahrers in Abhängigkeit von den erfassten Trittgrößen und der erfassten Pedalstellung erkennt, und
• ein Steuersignal zur Regelung (380) des Motordrehmoments zur Erzeugung eines konstanten Vortriebs in Abhängigkeit der Trittgröße und des erkannten Wiegetritts erzeugt.

10. Steuergerät (103) nach Anspruch 9, **dadurch gekennzeichnet, dass** das Steuergerät (103)
• eine Sattelbelastung durch den Zweiradfahrer mittels eines Drucksensors (120) erfasst, und
• das Steuersignal zusätzlich in Abhängigkeit der Sattelbelastung erzeugt.

11. Steuergerät (103) nach einem der Ansprüche 9 oder 10, **dadurch gekennzeichnet, dass** das Steuergerät (201)
• eine Ankupplung eines Anhängers an eine Anhängerkupplung (104) des Zweirads (100) mittels eines Kupplungssensors (105) erfasst, und
• das Steuersignal nur bei einer erfassten Ankupplung erzeugt.

12. Zweirad (100) mit einem Steuergerät (103) nach einem der Ansprüche 9 bis 11.

## Claims

1. Control method for a motor torque of a drive motor (101) of a bicycle (100), wherein the bicycle (100) is specified for being driven manually by means of a pedalling power exerted by the cyclist on pedals (102) of the bicycle (100) and motorized by means of a motor torque of the drive motor (101), wherein the control method comprises at least the following steps:
- detecting (310) pedalling variables which represent the activation of the pedals (102) by the cyclist;
- detecting (320) at least one pedal position of the pedals (102);
**characterized by** the following steps:
- identifying (370) an out-of-the-saddle pedalling action of the cyclist as a function of the detected pedalling variables and the detected pedal position; and
- controlling (380) the motor torque of the drive motor (101) for generating a constant propulsion of the bicycle (100) as a function of the pedalling variables and of the identified out-of-the-saddle pedalling action.

2. Control method according to Claim 1, **characterized in that** the control method comprises the following steps:
- detecting (330) a position of the bicycle frame (130); and
- identifying (370) the out-of-the-saddle pedalling action of the cyclist additionally as a function of the detected position of the bicycle frame (130).

3. Control method according to one of the preceding claims, **characterized in that** the control method comprises the following steps:
- detecting (340) an acceleration (a) of the bicycle (100) in the direction of the transverse axis of the bicycle (100); and
- identifying (370) the out-of-the-saddle pedalling action of the cyclist additionally as a function of the detected acceleration.

4. Control method according to one of the preceding claims, **characterized in that** the control method additionally comprises the following steps:
- detecting (350) a saddle load by the cyclist; and
- controlling (380) the motor torque of the drive motor (101) additionally as a function of the saddle load.

5. Control method according to one of the preceding claims, **characterized in that** the control method additionally comprises the following steps:
- detecting (360) the presence of a coupled trailer on a trailer coupling (104) of the bicycle (100); and
- controlling (380) the motor torque of the drive motor (101) additionally as a function of a detected coupled trailer.

6. Control method according to one of the preceding claims, **characterized in that** the identification (370) of the out-of-the-saddle pedalling action of the cyclist takes place as a function of a comparison between a right pedalling force exerted by the cyclist on a right pedal and of a left pedalling force exerted by the cyclist on a left pedal, wherein the right pedalling force and the left pedalling force are determined as a function of the detected pedalling variables.

7. Control method as claimed in one of the preceding claims, **characterized in that** the identification (370) of the out-of-the-saddle pedalling action of the cyclist is carried out as a function of a comparison (320) of the pedalling variables and a threshold value (S).

8. Control method according to one of the preceding claims, **characterized in that** the identification (370) of the out-of-the-saddle pedalling action of the cyclist takes place as a function of a comparison between a pedalling frequency and a limit frequency, wherein the pedalling frequency is determined as a function of the detected pedalling variables.

9. Control apparatus (103) for a drive motor (101) of a bicycle (100), wherein the bicycle (100) is specified for being driven manually by means of a pedalling power exerted by the cyclist on pedals of the bicycle and motorized by means of a motor torque of the drive motor, wherein the control apparatus (103)
- by means of a pedalling variable sensor (110), in particular a torque sensor, detects pedalling variables, wherein the pedalling variables represent the activation of the pedals by the cyclist;
- by means of a position sensor (106) detects a pedal position of at least one pedal (102) of the bicycle (100); **characterized in that** the control apparatus moreover
- identifies an out-of-the-saddle pedalling action of the cyclist as a function of the detected pedalling variables and of the detected pedal position; and
- generates a control signal for controlling (380) the motor torque for generating a constant propulsion as a function of the pedalling variable and of the identified out-of-the-saddle pedalling action.

10. Control apparatus (103) according to Claim 9, **characterized in that** the control apparatus (103)
- by means of a pressure sensor (120) detects a saddle load by the cyclist; and
- generates the control signal additionally as a function of the saddle load.

11. Control apparatus (103) according to one of Claims 9 or 10, **characterized in that** the control apparatus (201)
- by means of a coupling sensor (105) detects the presence of a coupled trailer on a trailer coupling (104) of the bicycle (100); and
- generates the control signal only upon detecting a coupled trailer.

12. Bicycle (100) having a control apparatus (103) according to one of Claims 9 to 11.

## Revendications

1. Procédé de régulation pour un couple d'un moteur d'entraînement (101) d'un deux-roues (100), le deux-roues (100) étant conçu pour être entraîné manuellement par le biais d'une force de pédalage du conducteur du deux-roues sur des pédales (102) du deux-roues (100) et de manière motorisée par le biais d'un couple du moteur d'entraînement (101), le procédé de régulation comprenant au moins les étapes suivantes
• détection (310) de grandeurs de pédalage qui représentent l'actionnement des pédales (102) par le conducteur du deux-roues,
• détection (320) d'au moins une position des pédales (102),
**caractérisé par** les étapes suivantes :
• identification (370) d'un pédalage en danseuse du conducteur du deux-roues en fonction des grandeurs de pédalage détectées et de la position de pédale détectée, et
• régulation (380) du couple du moteur d'entraînement (101) pour la génération d'une propulsion constante du deux-roues (100) en fonction des grandeurs de pédalage et du pédalage en danseuse identifié.

2. Procédé de régulation selon la revendication 1, **caractérisé en ce que** le procédé de régulation comprend les étapes suivantes
• détection (330) d'une position du cadre de deux-roues (130), et
• identification (370) du pédalage en danseuse du conducteur du deux-roues en outre en fonction de la position détectée du cadre de bicyclette (130).

3. Procédé de régulation selon l'une des revendications précédentes, **caractérisé en ce que** le procédé de régulation comprend les étapes suivantes
• détection (340) d'une accélération (a) du deux-roues (100) dans la direction de l'axe transversal du deux-roues (100), et
• identification (370) du pédalage en danseuse du conducteur du deux-roues en outre en fonction de l'accélération détectée.

4. Procédé de régulation selon l'une des revendications précédentes, **caractérisé en ce que** le procédé de régulation comprend en outre les étapes suivantes
• détection (350) d'une sollicitation exercée sur la selle par le conducteur du deux-roues, et
• régulation (380) du couple du moteur d'entraînement (101) en outre en fonction de la sollicitation sur la selle.

5. Procédé de régulation selon l'une des revendications précédentes, **caractérisé en ce que** le procédé de régulation comprend en outre les étapes suivantes
• détection (360) d'un attelage d'une remorque à un dispositif d'attelage de remorque (104) du deux-roues (100), et
• régulation (380) du couple du moteur d'entraînement (101) en outre en fonction d'un attelage détecté.

6. Procédé de régulation selon l'une des revendications précédentes, **caractérisé en ce que** l'identification (370) du pédalage en danseuse du conducteur du deux-roues a lieu en fonction d'une comparaison entre une force de pédalage droite du conducteur du deux-roues sur une pédale droite et une force de pédalage gauche du conducteur du deux-roues sur une pédale gauche, la force de pédalage droite et la force de pédalage gauche étant déterminées en fonction des grandeurs de pédalage détectées.

7. Procédé de régulation selon l'une des revendications précédentes, **caractérisé en ce que** l'identification (370) du pédalage en danseuse du conducteur du deux-roues est effectuée en fonction d'une comparaison (320) des grandeurs de pédalage avec une valeur seuil (S).

8. Procédé de régulation selon l'une des revendications précédentes, **caractérisé en ce que** l'identification (370) du pédalage en danseuse du conducteur du deux-roues a lieu en fonction d'une comparaison entre une fréquence de pédalage et une fréquence limite, la fréquence de pédalage étant déterminée en fonction des grandeurs de pédalage détectées.

9. Appareil de commande (103) pour un moteur d'entraînement (101) d'un deux-roues (100), le deux-roues (100) étant conçu pour être entraîné manuellement par le biais d'une force de pédalage du conducteur du deux-roues sur des pédales du deux-roues et de manière motorisée par le biais d'un couple du moteur d'entraînement, l'appareil de commande (103)
• détectant des grandeurs de pédalage au moyen d'un capteur de grandeurs de pédalage (110), en particulier d'un capteur de couple, les grandeurs de pédalage représentant l'actionnement des pédales par le conducteur du deux-roues,
• détectant une position d'au moins une pédale (102) du deux-roues (100) au moyen d'un capteur de position (106),
**caractérisé en ce qu'**en outre l'appareil de commande
• identifie un pédalage en danseuse du conducteur du deux-roues en fonction des grandeurs de pédalage détectées et de la position de pédale détectée, et
• génère un signal de commande pour la régulation (380) du couple de moteur pour la génération d'une propulsion constante en fonction des grandeurs de pédalage et du pédalage en danseuse identifié.

10. Appareil de commande (103) selon la revendication 9, **caractérisé en ce que** l'appareil de commande (103)
• détecte, au moyen d'un capteur de pression (120), une sollicitation exercée sur la selle par le conducteur du deux-roues, et
• génère le signal de commande en outre en fonction de la sollicitation sur la selle.

11. Appareil de commande (103) selon l'une des revendications 9 et 10, **caractérisé en ce que** l'appareil de commande (201)
• détecte, au moyen d'un capteur d'attelage (105), un attelage d'une remorque à un dispositif d'attelage de remorque (104) du deux-roues (100), et
• ne génère le signal de commande qu'en cas d'attelage détecté.

12. Deux-roues (100) comportant un appareil de commande (103) selon l'une des revendications 9 à 11.
